# EUROPEAN PATENT APPLICATION

(11) **EP 3 632 969 A1**
(43) Date of publication of application: **08.04.2020**
(21) Application number: 18806133.7
(22) Date of filing: 15.05.2018
(51) Int. Cl.: C08J 5/24

(54) **FIBER-REINFORCED MOLDING MATERIAL AND MOLDED OBJECT**

(30) Priority: 25.05.2017 JP 2017103531
(71) Applicant: Mitsubishi Chemical Corporation, Tokyo 100-8251 (JP)
(72) Inventor: NAKAO Hiroyuki, Tokyo 100-8251 (JP); TSUCHIYA Seiji, Tokyo 100-8251 (JP)
(74) Representative: Hoffmann Eitle
(86) International application number: PCT/JP2018/018705
(87) International publication number: WO 2018/216549

(57) **Abstract**

A fiber-reinforced molding material of the present invention includes a matrix resin and a reinforcing fiber,
wherein the matrix resin includes a reactant of the following component (A) and the following component (B), and the following component (C), and
a spiral flow length measured in accordance with EIMS T901 is 300 mm or longer,
component (A): a component having one or more ethylenically unsaturated groups in one molecule and including at least one selected from the group consisting of the following component (A-1) and the following component (A-2);
component (A-1): an unsaturated polyester resin having one or more ethylenically unsaturated groups and one or more hydroxyl groups in one molecule;
component (A-2): an epoxy (meth)acrylate resin having one or more ethylenically unsaturated groups and one or more hydroxyl groups in one molecule;
component (B): an isocyanate compound;
component (C): a radical polymerization inhibitor having no hydroxyl group in a molecule.

## Description

### [Technical Field]

The present invention relates to a fiber-reinforced molding material and a molded article.

Priority is claimed on Japanese Patent Application No. 2017-103531, filed May 25, 2017, the content of which is incorporated herein by reference.

### [Background Art]

A sheet molding compound (hereinafter also referred to as "SMC"), which is one of fiber-reinforced molding materials, is a compound obtained by blending a matrix resin composition containing a thermosetting resin or the like and a reinforcing fiber bundle. When an SMC is subjected to heat and pressure molding in a mold, the matrix resin composition and the reinforcing fiber bundle flow integrally to fill the mold cavity. Therefore, SMCs are intermediate materials that are advantageous for obtaining molded products of various shapes, such as molded products having partially different thicknesses and molded products having ribs and/or bosses, and are widely used for outer skins, interior materials and structural materials of automobiles, other general industrial applications, and the like.

As a base resin of a matrix resin composition in an SMC, a vinyl ester resin or an unsaturated polyester resin is generally used from the viewpoint of cost performance.

Further, a thickener may be blended in the matrix resin composition of the SMC. In general, oxides or hydroxides of alkaline earth metals (such as magnesium oxide, magnesium hydroxide and calcium hydroxide) or polyisocyanate compounds are used as the thickener.

Patent Document 1 proposes an SMC including an unsaturated polyester resin composition containing an unsaturated polyester resin, a shrinkage reducing agent, an inorganic filler, a glass balloon, a polyfunctional isocyanate compound and an organic bentonite, and a glass fiber (reinforcing fiber bundle).

However, this SMC has a large content of various additives for strengthening the adhesion between the reinforcing fiber bundle and the unsaturated polyester resin composition and cannot contain a large amount of reinforcing fiber bundle, and the mechanical properties of the obtained molded articles are lower than those of composite materials of epoxy resins, so that the physical properties of the reinforcing fiber bundle cannot be sufficiently exhibited, which was a problem.

Patent Document 2 proposes an SMC including: a thermosetting resin composition containing a thermosetting resin composed of a radically polymerizable oligomer constituted of one or more types of unsaturated polyesters, vinyl esters, urethane (meth)acrylates and the like, and a polymerizable monomer, a polyisocyanate and the like; and a carbon fiber bundle.

### [Citation List]

### [Patent Documents]

[Patent Document 1] Japanese Unexamined Patent Application, First Publication No. 2009-29921
[Patent Document 2] Japanese Unexamined Patent Application, First Publication No. 2009-209269

### [Summary of Invention]

### [Technical Problem]

For thickening with a polyisocyanate as described in Patent Document 2, production of an ethylenically unsaturated group-containing prepolymer by the reaction of the radically polymerizable oligomer having a hydroxyl group with the isocyanate group of a thickener, and generation of moderate viscosity in the SMC by this prepolymer function effectively. For this reason, it is easy to control the impregnation properties of the matrix resin composition into the carbon fiber bundle at the time of SMC production, and the mechanical properties of the obtained molded article are also favorable.

On the other hand, it is difficult to control the reaction between the polyisocyanate and the radically polymerizable oligomer. For this reason, there is a problem that during storage, transportation and the like of the SMC, the curing characteristics of the SMC change, the flowability at the time of heat and pressure molding of the SMC is lowered and the moldability deteriorates with time.

It should be noted that in Patent Document 2, the amount of polyisocyanate added is very small, and a large portion of those blended as a thickening mechanism is an inorganic filler such as calcium carbonate. In Patent Document 2, appropriate control of the reaction of prepolymers has not been considered.

In view of such problems of the prior art, the present invention has an object of providing: a fiber-reinforced molding material excellent in the impregnation properties of a matrix resin into reinforcing fibers at the time of producing a fiber-reinforced molding material, such as an SMC, and the mechanical properties of the obtained molded article, and in which a decrease in flowability over time at the time of molding is suppressed; and a molded article using the same.

### [Solution to Problem]

The present invention includes the following aspects.
[1] A fiber-reinforced molding material including a matrix resin and a reinforcing fiber, wherein
   the aforementioned matrix resin includes a reactant of the following component (A) and the following component (B), and the following component (C), and
   a spiral flow length measured in accordance with EIMS T901 is 300 mm or longer,
   component (A): a component having one or more ethylenically unsaturated groups in one molecule and including at least one selected from the group consisting of the following component (A-1) and the following component (A-2);
   component (A-1): an unsaturated polyester resin having one or more ethylenically unsaturated groups and one or more hydroxyl groups in one molecule;
   component (A-2): an epoxy (meth)acrylate resin having one or more ethylenically unsaturated groups and one or more hydroxyl groups in one molecule;
   component (B): an isocyanate compound;
   component (C): a radical polymerization inhibitor having no hydroxyl group in a molecule.
[2] The fiber-reinforced molding material according to [1], wherein the aforementioned spiral flow length after 168 hours of production is 500 mm or longer.
[3] The fiber-reinforced molding material according to [1] or [2], wherein a total content of the aforementioned component (A-1) and the aforementioned component (A-2) is 90% by mass or more with respect to a total mass of the aforementioned component (A).
[4] The fiber-reinforced molding material according to any one of [1] to [3], wherein a content of the aforementioned component (B) is from 5 to 25% by mass with respect to a total mass of the aforementioned matrix resin.
[5] The fiber-reinforced molding material according to any one of [1] to [4], wherein a content of the aforementioned component (C) is 50 ppm by mass or more with respect to a total mass of the aforementioned matrix resin.
[6] The fiber-reinforced molding material according to any one of [1] to [5], wherein a content of the aforementioned component (C) is from 0.025 to 0.1 parts by mass with respect to 100 parts by mass of the aforementioned component (A).
[7] The fiber-reinforced molding material according to any one of [1] to [6], wherein the aforementioned component (C) is a compound which exhibits a polymerization inhibiting function at a temperature of 100°C or more.
[8] The fiber-reinforced molding material according to any one of [1] to [7], wherein the aforementioned reinforcing fiber is a carbon fiber.
[9] The fiber-reinforced molding material according to any one of [1] to [8], which has a gel time (exothermic method, 140°C) of 50 seconds or more and a cure time (exothermic method, 140°C) of 55 seconds or more.
[10] The fiber-reinforced molding material according to any one of [1] to [9], wherein the aforementioned fiber-reinforced molding material is a sheet molding compound containing a reinforcing fiber bundle of short fibers as the aforementioned reinforcing fiber.
[11] A molded article including a cured product of the fiber-reinforced molding material of any one of the above [1] to [10].

### [Advantageous Effects of Invention]

According to the present invention, it is possible to provide a fiber-reinforced molding material excellent in the impregnation properties of a matrix resin composition into a reinforcing carbon fiber bundle at the time of producing a fiber-reinforced molding material, such as an SMC, and the mechanical properties of the obtained molded article, and in which a decrease in flowability over time at the time of molding is suppressed; and a molded article using the same.

### [Description of Embodiments]

### (Fiber-reinforced molding material)

The fiber-reinforced molding material of the present invention includes a matrix resin and a reinforcing fiber.

Examples of the form of the fiber-reinforced molding material of the present invention include an SMC and a bulk molding compound (BMC), and an SMC is preferable from the viewpoints of good handleability and excellent moldability and mechanical properties of molded articles.

### [Matrix resin]

The matrix resin contains a reactant of the following component (A) and the following component (B), and the following component (C).

The matrix resin preferably further contains the following component (D).

The matrix resin can further contain other components other than the components (A) to (D), if necessary, as long as the effects of the present invention are not impaired.

### <Component (A)>

The component (A) has one or more ethylenically unsaturated groups in one molecule. Further, it contains at least one selected from the group consisting of the following component (A-1) and the following component (A-2).

Component (A-1): an unsaturated polyester resin having one or more ethylenically unsaturated groups and one or more hydroxyl groups in one molecule.

Component (A-2): an epoxy (meth)acrylate resin having one or more ethylenically unsaturated groups and one or more hydroxyl groups in one molecule.

When the component (A) has an ethylenically unsaturated group, the matrix resin has thermosetting properties. In addition, when the component (A) contains at least one selected from the group consisting of the unsaturated polyester resin and the epoxy (meth)acrylate resin, the polymerizability at the time of curing the matrix resin is improved. Moreover, since a reactant with the component (B) to be described later is produced in the matrix resin because the unsaturated polyester resin or the epoxy (meth)acrylate resin has a hydroxyl group, the fiber-reinforced molding material containing this matrix resin increases in viscosity.

One or more types of compounds may constitute the component (A).

When one type of compound constitutes the component (A), the compound is at least one selected from the group consisting of the component (A-1) and the component (A-2).

When two or more types of compounds constitute the component (A), all of those compounds may be at least one selected from the group consisting of the component (A-1) and the component (A-2), or a portion of those compounds may be at least one selected from the group consisting of the component (A-1) and the component (A-2), while the remainder being other compounds other than the component (A-1) and the component (A-2) (for example, a polymerizable vinyl monomer to be described later).

When the component (A) contains other compounds, the other compound may be a compound having one or more hydroxyl groups in one molecule, may be a compound having no hydroxyl group, or may be both of them.

### "Component (A-1)"

The component (A-1) can be appropriately selected from known unsaturated polyester resins.

The number of ethylenically unsaturated groups which the component (A-1) has in one molecule is preferably from 1 to 2. When the number of the ethylenically unsaturated groups is equal to or less than the above upper limit value, the polymerizability at the time of curing the fiber-reinforced molding material including the matrix resin that contains a reactant of the component (A-1) and the component (B) is further improved.

The number of hydroxyl groups which the component (A-1) has in one molecule is preferably from 1 to 2.5. When the number of the hydroxyl groups is equal to or more than the above lower limit value, the thickening properties of the fiber-reinforced molding material including the matrix resin that contains a reactant of the component (A-1) and the component (B) are further improved. When the number of the hydroxyl groups is equal to or less than the above upper limit value, the flowability at the time of molding the fiber-reinforced molding material including the matrix resin that contains a reactant of the component (A-1) and the component (B) is further improved.

The component (A-1) is typically a polyester resin synthesized by the condensation of an α,β-olefin-based unsaturated dicarboxylic acid and a dihydric glycol (polycondensate of the α,β-olefin-based unsaturated dicarboxylic acid and the dihydric glycol).

In the synthesis of the polyester resin, in addition to these two components, dicarboxylic acids other than α,β-olefin-based unsaturated dicarboxylic acids (saturated dicarboxylic acids, aromatic dicarboxylic acids, and the like), dicyclopentadienes reactive with dicarboxylic acids, alcohols other than dihydric glycols (monohydric alcohols (monools), trihydric alcohols (triols) and the like) or the like can be used in combination.

Examples of the α,β-olefin-based unsaturated dicarboxylic acid include maleic acid, fumaric acid, itaconic acid, citraconic acid, and anhydrides of these dicarboxylic acids. Among them, fumaric acid is preferred.

Examples of other dicarboxylic acids which can be used in combination with the α,β-olefin-based unsaturated dicarboxylic acid include adipic acid, sebacic acid, succinic acid, gluconic acid, phthalic acid anhydride, o-phthalic acid, isophthalic acid, terephthalic acid, tetrahydrophthalic acid and tetrachlorophthalic acid. Among these, isophthalic acid is preferred.

Examples of the dihydric glycol include alkanediols, oxaalkanediols and alkylene oxide adducts of bisphenol A. Examples of the alkylene oxide include ethylene oxide and propylene oxide.

Examples of the alkanediols include ethylene glycol, 1,2-propylene glycol, 1,3-propylene glycol, 1,3-butanediol, 1,4-butanediol, neopentyl glycol, 1,5-pentanediol, 1,6-hexanediol and cyclohexanediol.

Examples of the oxaalkanediols include dioxyethylene glycol, dipropylene glycol and triethylene glycol.

Among the above possibilities, neopentyl glycol and dipropylene glycol are preferable.

Examples of monohydric or trihydric alcohols that can be used in combination with glycols include octyl alcohol, oleyl alcohol and trimethylolpropane.

### "Component (A-2)"

The component (A-2) can be appropriately selected from known epoxy (meth)acrylate resins.

The number of ethylenically unsaturated groups which the component (A-2) has in one molecule is preferably from 1 to 2. When the number of the ethylenically unsaturated groups is equal to or less than the above upper limit value, the polymerizability at the time of curing the fiber-reinforced molding material including the matrix resin that contains a reactant of the component (A-2) and the component (B) is further improved.

The number of hydroxyl groups which the component (A-2) has in one molecule is preferably from 1 to 2.5. When the number of the hydroxyl groups is equal to or more than the above lower limit value, the thickening properties of the fiber-reinforced molding material including the matrix resin that contains a reactant of the component (A-2) and the component (B) are further improved. When the number of the hydroxyl groups is equal to or less than the above upper limit value, the flowability at the time of molding the fiber-reinforced molding material including the matrix resin that contains a reactant of the component (A-2) and the component (B) is further improved.

The component (A-2) is typically an unsaturated acid epoxy ester obtained from the reaction of an epoxy resin component and an unsaturated monobasic acid component.

The epoxy resin component is a compound having at least two epoxy groups in one molecule, and examples thereof include a diglycidyl ether type epoxy resin having a bisphenol compound represented by bisphenol A, bisphenol F and brominated bisphenol A as a main skeleton; a polyglycidyl ether type epoxy resin having a polynuclear phenolic compound represented by phenol novolac, cresol novolac and brominated phenol novolac as a main skeleton; a polyglycidyl ester type epoxy resin having an organic polybasic acid represented by dimer acid and trimellitic acid as a main skeleton; and a glycidyl ether type epoxy resin having a diol compound such as an ethylene oxide or propylene oxide adduct of bisphenol A, glycol, and hydrogenated bisphenol A as a main skeleton. One type of these epoxy resins may be used alone or two or more types thereof may be used in combination. Among the above possibilities, a diglycidyl ether type epoxy resin having bisphenol A as a main skeleton is preferable.

The unsaturated monobasic acid component is a monobasic acid having an ethylenically unsaturated group, and examples thereof include acrylic acid, methacrylic acid, crotonic acid and sorbic acid. One type of these unsaturated monobasic acid components may be used alone or two or more types thereof may be used in combination. Among the above possibilities, acrylic acid is preferred.

Each one of the components (A-1) and (A-2) may be used alone or two or more types thereof may be used in combination.

The component (A) may further contain other compounds other than the component (A-1) and the component (A-2).

The other compound is not particularly limited as long as it is a compound having an ethylenically unsaturated group, and examples thereof include polymerizable vinyl monomers, unsaturated polyester resins other than the component (A-1) (for example, unsaturated polyester resins having no hydroxyl group) and epoxy (meth)acrylate resins other than the component (A-2) (for example, epoxy (meth)acrylate resins having no hydroxyl group).

The polymerizable vinyl monomer is a monomer having an ethylenically unsaturated group. The polymerizable vinyl monomer functions as a reactive diluent.

Examples of the polymerizable vinyl monomer include a polymerizable vinyl monomer having no hydroxyl group such as styrene and vinyl chloride; and a polymerizable vinyl monomer having a hydroxyl group such as 1,3-propanediol. One type of these polymerizable vinyl monomers may be used alone or two or more types thereof may be used in combination.

The unsaturated polyester resins other than the component (A-1) and the epoxy (meth)acrylate resins other than component (A-2) can be selected appropriately from unsaturated polyester resins and epoxy (meth)acrylate resins that are generally used as SMC materials.

The total content of the component (A-1) and the component (A-2) in the component (A) is preferably 90% by mass or more, more preferably 95% by mass or more, and most preferably 100% by mass, with respect to the total mass of the component (A). In other words, it is most preferable that the component (A) is composed only of at least one selected from the group consisting of the component (A-1) and the component (A-2).

### <Component (B)>

The component (B) is an isocyanate compound.

The component (B) acts as a thickener in the matrix resin. By reacting the hydroxyl group of the component (A) with the isocyanate group of the component (B), an ethylenically unsaturated group-containing prepolymer is formed as a reactant, and the prepolymer functions effectively to produce an appropriate viscosity for the fiber-reinforced molding material.

As the component (B), for example, a diisocyanate compound (B-1) represented by the formula: OCN-R¹-NCO (wherein R¹ is a hydrocarbon group), a diisocyanate prepolymer (B-2), their modified products and the like can be mentioned.

Examples of the diisocyanate compound (B-1) include 2,4-toluene diisocyanate, 2,6-toluene diisocyanate, 4,4'-diphenylmethane diisocyanate, isophorone diisocyanate and hexamethylene diisocyanate.

Examples of the diisocyanate prepolymer (B-2) include diisocyanate prepolymers having isocyanate groups at both ends, which can be obtained by the reaction of a polyether polyol or polyester polyol having a hydroxyl group with the diisocyanate compound (B-1).

### <Component (C)>

The component (C) is a radical polymerization inhibitor having no hydroxyl group in the molecule.

The radical polymerization inhibitor is a compound having a function of reacting with an active radical species that causes radical polymerization to form an inactive radical or a stable compound that does not cause radical polymerization, and in brief, it is a compound having a function of capturing active radical species, the so-called polymerization inhibiting function. When the matrix resin composition contains the component (C), it is possible to suppress a decrease in flowability at the time of molding (at the time of curing reaction) of a reinforced molding material such as an SMC.

The component (C) has no hydroxyl group in the molecule.

Among the radical polymerization inhibitors exhibiting a polymerization inhibiting function as described above, for example, there are compounds having a hydroxyl group such as hydroquinone. When the radical polymerization inhibitor has a hydroxyl group, the radical polymerization inhibitor reacts with the isocyanate group of the component (B). As a result, since the isocyanate group which was originally expected to act as a thickener by reacting with the component (A) is lost, the thickening effect is inhibited. In addition, due to this reaction, a radical scavenging action as a radical polymerization inhibitor does not sufficiently function, and the radical scavenging action at near the molding temperature (120 to 160°C) of a fiber-reinforced molding material such as an SMC does not work sufficiently, and the flowability during molding is impaired.

When the component (C) does not have a hydroxyl group, the thickening effect is not inhibited, and the flowability at the time of molding is not impaired.

The component (C) is not limited as long as the above conditions are satisfied, and can be appropriately selected from among various compounds generally known as radical polymerization inhibitors.

Since the component (C) preferably exhibits a polymerization inhibiting function at the time of its molding, although it is stable at the time of production or storage of the reinforced molding material, the temperature at which the component (C) exhibits the polymerization inhibiting function is preferably 100°C or higher, more preferably within the range of 100 to 160°C, and still more preferably within the range of 100 to 140°C.

The temperature at which the radical polymerization inhibitor such as the component (C) exhibits a polymerization inhibiting function can be confirmed by differential scanning calorimetry (DSC).

Preferred examples of the component (C) include quinone compounds such as p-benzoquinone, naphthoquinone, phenanthraquinone, p-xyloquinone, p-toluquinone, 2,6-dichloroquinone, 2,5-diphenyl-p-benzoquinone, 2,5-diacetoxy-p-benzoquinone and 2,5-dicaproxy-p-benzoquinone. One of these quinone compounds may be used alone or two or more compounds may be used in combination. Among the above compounds, p-benzoquinone is preferred. These quinone compounds exhibit a polymerization inhibiting function at a temperature of 100°C or higher. Furthermore, the scavenging action of radicals generated from the component (D) described later, particularly radicals generated from organic peroxide, is very strong, and the decrease in flowability at the time of molding is markedly suppressed. Therefore, the storage stability of a fiber-reinforced molding material such as an SMC is particularly excellent.

It should be noted that examples of the radical polymerization inhibitor having a hydroxyl group which exhibits the above-mentioned polymerization inhibiting function at a temperature of 100°C or higher include catechol compounds such as catechol and t-butyl catechol, and hydroquinone compounds such as hydroquinone, p-t-butyl catechol, 2,5-t-butyl hydroquinone and mono-t-butyl hydroquinone. These compounds have a very strong radical scavenging function similar to quinone compounds. However, because of having a hydroxyl group, there are concerns that the thickening effect is inhibited, the radical scavenging action does not function sufficiently, or the like.

### <Component (D)>

The component (D) is a polymerization initiator.

The component (D) is not particularly limited and can be selected from polymerization initiators used at the time of curing ordinary epoxy (meth)acrylate resins and unsaturated polyester resins.

Examples of the component (D) include organic peroxides such as 1,1-di(t-butylperoxy)cyclohexane, t-butyl peroxyisopropyl carbonate, t-amyl peroxyisopropyl carbonate, methyl ethyl ketone peroxide, t-butyl peroxybenzoate, benzoyl peroxide, dicumyl peroxide and cumene hydroperoxide. One of these organic peroxides may be used alone or two or more compounds may be used in combination.

### <Other components>

Examples of other components include additives such as inorganic fillers, internal mold release agents, stabilizers, pigments and colorants.

The type of inorganic filler is not particularly limited, and for example, known materials such as calcium carbonate, magnesium carbonate, aluminum hydroxide, magnesium hydroxide, calcium hydroxide, silica, fused silica, barium sulfate, titanium oxide, magnesium oxide, calcium oxide, aluminum oxide, calcium phosphate, talc, mica, clay and glass powders can be used. One of these inorganic fillers may be used alone or two or more of these inorganic fillers may be used in combination.

There is no particular limitation on the type of internal mold release agent, and for example, known materials such as phosphoric acid ester derivatives, fatty acid metal salts such as zinc stearate and surfactants such as sodium dialkyl sulfosuccinate can be used. One of these internal mold release agents may be used alone or two or more of these may be used in combination.

### <Proportion of each component>

The content of the component (A) in the matrix resin is preferably from 50 to 95% by mass, and more preferably from 60 to 85% by mass, with respect to the total mass of the matrix resin. When the content of the component (A) is 50% by mass or more, more preferably 60% by mass or more, the mechanical properties of the obtained molded article are further improved. When the content of the component (A) is 95% by mass or less, more preferably 85% by mass or less, the impregnation properties of the matrix resin into reinforcing fibers such as carbon fibers at the time of producing a fiber-reinforced molding material such as an SMC are further improved.

The content of the component (B) is preferably such an amount that the number of isocyanate groups in the component (B) with respect to one hydroxyl group in the component (A-1) and the component (A-2) in the component (A) is 0.1 or more and 1.0 or less. When the number of the isocyanate groups is 0.1 or more, the matrix resin can be sufficiently thickened. When the number of the isocyanate groups is 1.0 or less, it is possible to suppress excess isocyanate groups from reacting and foaming with moisture and leaving the resulting foams inside a molded article (that is, a fiber-reinforced composite material) after molding.

The number of isocyanate groups in the component (B) with respect to one hydroxyl group in the component (A-1) and the component (A-2) in the component (A) is more preferably 0.3 or more and 0.8 or less.

The content of the component (B) in the matrix resin is preferably from 5 to 30% by mass, and more preferably from 15 to 25% by mass, with respect to the total mass of the matrix resin.

When the content of the component (B) is in the above range, the component (B) reacts with the component (A) without excess or deficiency, and the total amount of the content of the component (A) and the content of the component (B) will be the amount of the reactant of the component (A) and the component (B).

The content of the component (C) may be, for example, from 0.001 to 0.1 parts by mass with respect to 100 parts by mass of the component (A).

The content of the component (C) is preferably from 0.025 to 0.1 parts by mass, more preferably from 0.03 to 0.09 parts by mass, and still more preferably from 0.04 to 0.08 parts by mass with respect to 100 parts by mass of the component (A). When the content of the component (C) is 0.025 parts by mass or more, more preferably 0.03 parts by mass or more, and still more preferably 0.04 parts by mass or more, the fiber-reinforced molding material exhibits sufficient flowability at the time of heat and pressure molding. In addition, the flowability is less likely to decrease with time. When the content of the component (C) is 0.1 parts by mass or less, more preferably 0.09 parts by mass or less, and still more preferably 0.08 parts by mass or less, a sufficiently fast curing rate can be obtained at the time of heat and pressure molding, resulting in excellent fast curability. In addition, the cured product is sufficiently crosslinked, and excellent surface quality can be obtained.

The content of the component (C) with respect to the total mass of the matrix resin (hereinafter sometimes referred to as "content rate of the component (C) in the matrix resin") is preferably 30 ppm by mass or more. As a result, the fiber-reinforced molding material tends to exhibit sufficient flowability at the time of heat and pressure molding. The content rate of the component (C) in the matrix resin is more preferably 40 ppm by mass or more, and still more preferably 50 ppm by mass or more.

The upper limit of the content rate of the component (C) in the matrix resin is, for example, 300 ppm by mass. Therefore, the content rate of the component (C) in the matrix resin may be from 30 to 300 ppm by mass, may be from 40 to 300 ppm by mass, or may be from 50 to 300 ppm by mass.

The content rate of the component (C) in the matrix resin is measured by high performance liquid chromatography (HPLC).

The content of the component (D) is preferably from 0.1 to 5 parts by mass, and more preferably from 0.5 to 3 parts by mass with respect to 100 parts by mass of the component (A). When the content of the component (D) is 0.1 parts by mass or more, and more preferably 0.5 parts by mass or more, a sufficiently fast curing rate can be obtained at the time of heat and pressure molding, resulting in excellent fast curability. When the content of the component (D) is 5 parts by mass or less, and more preferably 3 parts by mass or less, the fiber-reinforced molding material exhibits sufficient flowability at the time of heat and pressure molding.

The matrix resin may further contain a radical polymerization inhibitor having a hydroxyl group as another component. However, since this radical polymerization inhibitor has a hydroxyl group, there are concerns that the thickening effect is inhibited, the radical scavenging action does not function sufficiently, or the like. Therefore, the smaller the content of the radical polymerization inhibitor having a hydroxyl group, the better. For example, the content is preferably 0.01 parts by mass or less and particularly preferably 0 parts by mass with respect to 100 parts by mass of the component (A). That is, it is particularly preferable that the matrix resin does not contain a radical polymerization inhibitor having a hydroxyl group.

### [Reinforcing fiber]

Examples of the reinforcing fibers include carbon fibers, glass fibers, aramid fibers, alumina fiber, silicon carbide fibers, boron fibers, metal fibers, natural fibers and mineral fibers. One of these reinforcing fibers may be used alone or two or more of these fibers may be used in combination.

As the reinforcing fiber, a carbon fiber is preferable from the viewpoints of high specific strength, high specific rigidity and weight reduction effects. Examples of the carbon fibers include polyacrylonitrile (PAN)-based carbon fibers, rayon-based carbon fibers and pitch-based carbon fibers, and PAN-based carbon fibers are preferable from the viewpoint of excellent compression strength of molded products.

As a form of reinforcing fibers, a reinforcing fiber bundle of short fibers is typically used. The reinforcing fiber bundle of short fibers is a cut piece obtained by cutting a reinforcing fiber bundle composed of continuous reinforcing fibers at a predetermined length.

When a carbon fiber bundle is used as the reinforcing fiber bundle, the number of filaments thereof is usually about 1,000 to 60,000.

When the fiber-reinforced molding material of the present invention is an SMC containing a carbon fiber as a reinforcing fiber, a carbon fiber bundle of short fibers is typically used as a form of the carbon fiber. The carbon fiber bundle of short fibers is a cut piece obtained by cutting a carbon fiber bundle composed of continuous carbon fibers at a predetermined length.

The fiber length of the carbon fiber bundle of short fibers is preferably set to the fiber length of reinforcing fibers generally used in the SMC. The fiber length of the carbon fiber bundle is preferably from 1 to 60 mm, and more preferably from 1 to 25 mm. When the fiber length of the carbon fiber bundle is equal to or more than the above lower limit value, the mechanical properties of a molded article (fiber-reinforced composite material) produced using the SMC are further improved. When the fiber length of the carbon fiber bundle is equal to or less than the above upper limit value, favorable flowability can be easily obtained when press molding the SMC.

When the fiber-reinforced molding material of the present invention is an SMC containing a carbon fiber as a reinforcing fiber, the content of the carbon fiber is preferably from 40 to 70% by mass, and more preferably from 45 to 60% by mass with respect to the total mass of the SMC. When the content of the carbon fiber is 40% by mass or more, and more preferably 45% by mass or more, the reinforcing effect by the carbon fiber is sufficiently exhibited, and the mechanical strength of the obtained molded article is further improved. When the content of the carbon fiber is 70% by mass or less, and more preferably 60% by mass or less, the flowability at the time of molding of the SMC is further improved.

The basis weight of carbon fibers in this SMC may be, for example, from 500 to 2,500 mg/m².

The fiber-reinforced molding material of the present invention has a spiral flow length measured in accordance with EIMS T901 of 300 mm or more. If the spiral flow length is less than 300 mm, the moldability tends to be poor since the flowability of the fiber-reinforced molding material at the time of heat and pressure molding is low. The spiral flow length is preferably 400 mm or more, and more preferably 500 mm or more.

The spiral flow length is a value measured for a fiber-reinforced molding material within 168 hours of production unless otherwise specified. The expression "within 168 hours of production" indicates within 168 hours from the time point where a reinforcing fiber is impregnated with a resin (in the case of an SMC, at a time point where an SMC precursor described later is obtained) (hereinafter also referred to as "immediately after production"). The detailed measurement procedure of the spiral flow length is as shown in the examples described later.

Further, in the fiber-reinforced molding material of the present invention, it is particularly preferable that the spiral flow length after 168 hours of production is 500 mm or more because the above-mentioned decrease in flowability with time tends to be small.

When measuring the spiral flow length at a time point other than immediately after production (for example, after 168 hours of production), the storage temperature of the fiber-reinforced molding material from immediately after production until the measurement of the spiral flow length is set to 23°C.

When the fiber-reinforced molding material of the present invention is an SMC, the viscosity after initial thickening at 25°C of a fiber-reinforced molding material immediately after production (hereinafter sometimes referred to as "SMC precursor") is preferably from 10 to 500 Pa·s, and more preferably from 20 to 300 Pa·s. Here, the "viscosity after initial thickening" means the viscosity at a time point where the SMC precursor is kept at 25°C for 60 minutes. The viscosity is a value measured by a B-type viscometer. When the viscosity after initial thickening is equal to or less than the above upper limit value, the impregnation properties of the matrix resin into the carbon fiber bundle are further improved. When the viscosity after initial thickening is equal to or more than the above lower limit value, the SMC has sufficient shape retention properties, and the handling properties are further improved.

### (SMC)

As one aspect of the fiber-reinforced molding material of the present invention, an SMC including a carbon fiber bundle and a thickened matrix resin can be mentioned.

The carbon fiber bundle and the matrix resin are respectively the same as those described above, respectively, and the preferred embodiments thereof are also the same. Further, the preferable range of the content of the carbon fiber bundle with respect to the total mass of the SMC is the same as the preferable range of the content of the carbon fiber with respect to the total mass of the SMC described above.

The basis weight of the carbon fiber bundle in the SMC may be, for example, from 500 to 2,500 mg/m².

As described above, when the hydroxyl group of the component (A) and the isocyanate group of the component (B) are reacted, an ethylenically unsaturated group-containing prepolymer is produced, and the matrix resin is thickened. Therefore, the thickened matrix resin contains this ethylenically unsaturated group-containing prepolymer. On the other hand, the matrix resin before thickening does not contain this ethylenically unsaturated group-containing prepolymer.

### [Method for producing fiber-reinforced molding material]

A method for producing the fiber-reinforced molding material of the present invention is not particularly limited. For example, the SMC in the above aspect can be produced by preparing an SMC precursor containing a carbon fiber bundle and a matrix resin, and thickening the matrix resin in the SMC precursor.

Hereinafter, a method for producing the fiber-reinforced molding material of the present invention will be described in more detail by showing an example of the method for producing an SMC. However, the method for producing the fiber-reinforced molding material of the present invention is not limited thereto, and additions, omissions, substitutions, and other modifications of the configurations are possible without departing from the scope and spirit of the present invention.

The method for producing an SMC in this example includes:
a step of preparing a matrix resin (matrix resin before thickening) containing the component (A), the component (B) and the component (C) (preparation step);
a step of impregnating a fiber substrate composed of a carbon fiber bundle with the aforementioned matrix resin to obtain an SMC precursor (impregnation step); and
a step of reacting the component (A) and the component (B) in the matrix resin impregnated in the aforementioned fiber substrate (thickening step).

### <Preparation step>

The matrix resin can be prepared by mixing the aforementioned components (A) to (C) and, if necessary, other components. As a mixing method, a conventionally used general method can be used as long as each component can be dispersed or dissolved uniformly. For example, the respective components constituting the matrix resin may be simultaneously mixed for preparation, or, if necessary, the components other than the component (B) are mixed beforehand, and the obtained mixture and the component (B) may be mixed immediately before the impregnation step. For the mixing operation, mixers such as a three-roll mill, a planetary mixer, a kneader, a universal stirrer, a homogenizer and a homo dispenser can be used, although they are not limited thereto.

The temperature at the time of mixing is, for example, from 20 to 25°C. The mixing time is, for example, from 10 to 15 minutes.

### <Impregnation step>

In the impregnation step, for example, a matrix resin is applied to each of two carrier films to form a matrix resin layer. A carbon fiber bundle is sprayed on the matrix resin layer of one carrier film to form a fiber substrate. In this fiber substrate, the orientation direction of carbon fibers is usually random. The other carrier film is superimposed on this fiber substrate with the matrix resin layer side facing the fiber substrate side and pressure bonded from the vertical direction to impregnate the matrix resin between the carbon fiber bundles and within the carbon fiber bundles of the fiber substrate. As a result, a sheet-like SMC precursor in which each matrix resin layer and the fiber substrate are integrated can be obtained.

The carrier film is not particularly limited, and for example, a film made of polypropylene can be used.

As a method for coating the matrix resin, for example, a coating process using a doctor blade can be mentioned. The temperature at the time of coating is, for example, from 20 to 25°C.

The coating amount of the matrix resin and the spraying amount of the carbon fiber bundle can be appropriately set according to the content of the carbon fiber bundle in the SMC precursor to be obtained.

Examples of the pressure bonding method include a pressure bonding process using a roller. The temperature at the time of pressure bonding is, for example, from 20 to 25°C. The pressure at the time of pressure bonding is, for example, from 0.1 to 0.6 MPa.

### <Thickening step>

In the thickening step, for example, the SMC precursor obtained in the impregnation step is kept almost isothermally. While maintaining the SMC precursor almost isothermally, the component (A) and the component (B) in the matrix resin are reacted as described above to thicken the matrix resin.

Here, the expression "almost isothermally" means that fluctuations of the holding temperature are ± 5°C or less.

The holding temperature and time can be appropriately set according to the types and amounts of the component (A) and the component (B). Usually, the holding temperature is about 10 to 50°C, and the holding time is about several days to several tens of days (for example, from 7 to 50 days).

### [Curing characteristics of fiber-reinforced composite material]

There are gel time (GT), cure time (CT) and maximum exothermic temperature (Tmax) measured by the exothermic method as indicators of the flowability and curing behavior (curing time and the like) during heat and pressure molding of fiber-reinforced composite materials.

The measurements of GT, CT and Tmax are performed in accordance with JASO M 406-87. More specifically, several layers of fiber-reinforced composite materials are superposed, a thermocouple is inserted thereinto, and a press curing process is performed under the conditions of 140°C and 0.3 Pa to thereby draw a curing exothermic curve, and the curing characteristics (GT, CT, Tmax and the like) are determined from this curing exothermic curve.

GT (exothermic method, 140°C) represents a GT measured by the above-mentioned measurement method. The same applies to CT (exothermic method, 140°C) and Tmax (exothermic method, 140°C).

The fiber-reinforced molding material of the present invention preferably has a GT (exothermic method, 140°C) of 50 seconds or more and a CT (exothermic method, 140°C) of 55 seconds or more, and more preferably has a GT (exothermic method, 140°C) of 50 to 65 seconds and a CT (exothermic method, 140°C) of 55 to 70 seconds. When the GT and CT of the fiber-reinforced composite material are respectively equal to or more than the above lower limit values, the flowability in the mold at the time of molding the fiber-reinforced composite material is excellent, and even a molded article having a complex shape can be molded with high accuracy and good reproducibility.

The Tmax (exothermic method, 140°C) of the fiber-reinforced molding material of the present invention is preferably from 180 to 230°C, and more preferably from 180 to 210°C. When the Tmax of an SMC is equal to or more than the above-mentioned lower limit value, the moldability at the time of heat and pressure molding of the fiber-reinforced composite material is excellent. When the Tmax is equal to or less than the above upper limit value, the mechanical properties of the molded article obtained by heat and pressure molding of a fiber-reinforced composite material are excellent.

The GT, CT and Tmax of the fiber-reinforced composite material can be adjusted by the contents of the component (A), the component (B) and the component (C) in the matrix resin. For example, when the content of the component (C) is 0.1 parts by mass or more, the GT and CT tend to be long.

In the fiber-reinforced composite material of the present invention described above, since the matrix resin contains the reactant of the component (A) and the component (B), and the component (C), the impregnation properties of the matrix resin at the time of producing the fiber-reinforced composite material (matrix resin before thickening) into the carbon fiber bundle are excellent. Therefore, in the fiber-reinforced composite material of the present invention, the matrix resin is favorably impregnated into the reinforcing fiber. Moreover, the molded article obtained by heat and pressure molding of the fiber-reinforced composite material of the present invention is excellent in mechanical properties. Furthermore, in the fiber-reinforced composite material of the present invention, a decrease in flowability at the time of molding with time during storage, transport and the like is suppressed, and the flow stability is excellent. Therefore, the fiber-reinforced composite material of the present invention can be favorably molded even after long term storage. In addition, it is possible to obtain a molded article excellent in accuracy, appearance and the like with less problems such as defects, deformations and blisters.

In general, in the production of a fiber-reinforced composite material such as an SMC, although the matrix resin is different, the same impregnation step as described above is performed. At this time, in order to produce a sheet (such as an SMC) in which the matrix resin is sufficiently impregnated between the reinforcing fibers (for example, between the carbon fiber bundles and within the carbon fiber bundles), the flowability and the impregnation performance of the matrix resin itself become important, in addition to the properties of the reinforcing fibers themselves (the dispersibility of the reinforcing fibers into the matrix resin, the impregnation properties of the matrix resin). That is, when the viscosity of the matrix resin is too high, due to the low flowability, the matrix resin cannot be sufficiently impregnated between the reinforcing fibers, and a sheet having many impregnation spots is obtained. On the other hand, when the viscosity of the matrix resin is too low, while the flow of the matrix resin between reinforcing fibers is smooth, it is difficult to maintain the final sheet-like form.

Accordingly, in order to adjust the viscosity of the matrix resin, a thickener is blended in the preparation stage of the matrix resin. As a result, the matrix resin can be made to have a low viscosity at the time of impregnation between reinforcing fibers and a viscosity capable of maintaining a sheet-like form after the impregnation.

When the component (B) (isocyanate compound) is used as a thickener and is combined with the component (A), as described above, an ethylenically unsaturated group-containing prepolymer is produced, and this prepolymer functions effectively to generate an appropriate viscosity in the SMC. Therefore, it is easy to control the flowability of the SMC. Further, the formation of the ethylenically unsaturated group-containing prepolymer also improves the mechanical properties of the obtained molded article.

On the other hand, only by the combination of the component (A) and the component (B), it is difficult to control their reaction, and over time during storage, transportation or the like of the fiber-reinforced composite material, there are problems in that the curing characteristics of the fiber-reinforced composite material change, the flowability at the time of heat and pressure molding of the fiber-reinforced composite material decreases, and the moldability decreases.

The present invention has been made as a result of intensive studies with regard to such problems by the present inventors, who found that the above problems can be solved by including the component (C) in the matrix resin.

### (Molded article)

The molded article of the present invention is a molded article containing a cured product (fiber-reinforced composite material) of the fiber-reinforced molding material of the present invention described above.

The molded article of the present invention may be composed of a cured product of the fiber-reinforced molding material of the present invention, or may be a combination of a member composed of the cured product of the fiber-reinforced molding material of the present invention and other members.

The molded article of the present invention is not particularly limited, and may be, for example, a molded article having a partially different thickness, a molded article having a rib and/or a boss, or the like.

The application of the molded article of the present invention is not particularly limited, and for example, outer skins, interior materials and structural materials of automobiles, and the like can be mentioned.

The molded article of the present invention can be produced by a production method including a step of heat and pressure molding the fiber-reinforced molding material of the present invention. Examples of the molding conditions include a condition in which heat and pressure curing is performed for 2 minutes under conditions of a mold temperature of 140°C and a pressure of 8 MPa.

The molded article of the present invention described above is excellent in mechanical properties (flexural strength, flexural modulus and the like) because it contains the cured product of the fiber-reinforced molding material of the present invention. Further, the accuracy, the appearance and the like are excellent with less problems such as defects, deformations and blisters.

The mechanical properties of the molded article of the present invention vary depending on the type and content rate of reinforcing fibers, but in the case where the fiber-reinforced molding material of the present invention is an SMC containing short carbon fibers as reinforcing fibers and the content of the carbon fibers is 50% by mass with respect to the total mass of SMC, it is preferable to satisfy either one or both of the following: the flexural strength measured by the measuring method shown in the examples described later is 300 MPa or more; and the flexural modulus measured by the measuring method shown in the examples described later is 24 GPa or more.

Although the upper limit of the above flexural strength is not particularly limited, for example, it is 500 MPa.

Although the upper limit of the above flexural modulus is not particularly limited, for example, it is 30 GPa.

### [Examples]

Hereinafter, the present invention will be specifically described by way of examples, but the present invention is in no way limited thereto.

The materials used are shown below.

### (Materials used)

Carbon fiber bundle (I): A carbon fiber bundle with 15,000 filaments (TR50S 15L manufactured by Mitsubishi Chemical Corporation) chopped to a length of 25 mm.

### <Component (A)>

Component (A1): A mixture of an epoxy (meth)acrylate resin and an unsaturated polyester resin (product name: NEOPOL 8113, manufactured by Japan U-PICA Co., Ltd.).

### <Component (B)>

Component (B1): Modified diphenylmethane diisocyanate (product name: COSMONATE LL, manufactured by Mitsui Chemicals, Inc.).

### <Component (C) and comparison products>

Component (C1): 1,4-benzoquinone (manufactured by Seiko Chemical Co., Ltd.).

Component (C2): hydroquinone (manufactured by Wako Pure Chemical Industries, Ltd.).

Component (C3): 1,4-naphthoquinone (manufactured by Tokyo Chemical Industry Co., Ltd.).

Component (C4): anthraquinone (manufactured by Tokyo Chemical Industry Co., Ltd.).

All of the components (C1) to (C4) are compounds having a polymerization inhibiting function at a temperature of 100°C or higher.

### <Component (D)>

Component (Dl): A 75% by mass solution of 1,1-di(t-butylperoxy)cyclohexane (product name: Perhexa C-75 (EB), manufactured by NOF Corporation).

Component (D2): A 74% by mass solution of t-butyl peroxyisopropyl carbonate (product name: Kayacarbon BIC-75, manufactured by Kayaku Akzo Co., Ltd.).

### <Other components>

Component (E1): Internal mold release agent (phosphoric acid ester derivative composition) (product name: MOLD WIZ INT-EQ-6, manufactured by Axel Plastics Research Laboratories, Inc.).

### (Example 1)

### <Preparation of resin paste>

A resin paste (matrix resin) was obtained by sufficiently mixing and stirring 100 parts by mass of the component (A1), 0.5 parts by mass of the component (D1), 0.5 parts by mass of the component (D2), 0.35 parts by mass of the component (E1), 22.0 parts by mass of the component (B1) and 0.04 parts by mass of the component (C1) at 25°C using a universal stirrer.

### <Production of SMC>

The obtained resin paste was applied onto each of two polyethylene films (carrier films) at 25°C to a thickness of 1.0 mm using a doctor blade, and a carbon fiber bundle (I) was dispersed thereon, so that the basis weight of the carbon fibers was substantially uniform and the direction of the carbon fibers was random. Subsequently, these carrier films made of polyethylene were superposed so that the resin paste sides faced each other, thereby obtaining a laminate. The laminate was pressed by being passed through between the rollers and the resin paste was impregnated into the carbon fiber bundle to obtain an SMC precursor.

The obtained SMC precursor was allowed to stand at room temperature (23°C) for 168 hours (7 days). As a result, the resin paste in the SMC precursor was sufficiently thickened to obtain an SMC. The content rate of the carbon fiber (carbon fiber content rate) was 50% by mass with respect to the total mass of the obtained SMC. Further, the basis weight of the carbon fiber in the SMC was 1,500 mg/m².

### <Evaluation of impregnation properties>

When the resin paste was impregnated into the reinforcing fiber bundle (I) to obtain an SMC precursor in the production of the SMC, the impregnation properties were evaluated by visual observation and the sense of touch. The evaluation criteria are as follows. The results are shown in Table 1.
A: The resin paste is sufficiently impregnated into the carbon fiber bundle.
B: Partially, the resin paste is not impregnated into the carbon fiber bundle.

### <Viscosity after initial thickening>

Within 1 hour from the time point of mixing the component (A) and the component (B) in the production of the resin paste, the SMC precursor obtained in the production of the SMC was maintained and thickened at 25°C for 60 minutes. The viscosity at this time was measured at 25°C using a B-type viscometer. The results are shown in Table 1.

### <Content rate of component (C) in matrix resin>

The content rate of the component (C) in the matrix resin of the SMC which was obtained immediately after the SMC precursor was allowed to stand at room temperature (23°C) for 168 hours (7 days) was determined by high performance liquid chromatography (HPLC). The results are shown in Table 1. The expression "ppm" in Table 1 denotes "ppm by mass".

### <Evaluation of spiral flow length>

The spiral flow length of SMC was measured under the following conditions in accordance with Japan Electrical Insulating and Advanced Performance Materials Industrial Association Standard EIMS T901. The results are shown in Table 1.
(1) 8 sheets of SMC obtained in the above production of SMC, that is, the SMC which was obtained immediately after the SMC precursor obtained in the impregnation step was allowed to stand at room temperature (23°C) for 168 hours (7 days), having a size of 70 mm × 70 mm were cut out without peeling off the carrier film.
(2) The carrier film is peeled off from the SMC cut out in the above (1), and a plurality of SMCs are laminated so that the total mass (mass of the laminate) is 90 ± 0.2 g to produce a laminate.
(3) The laminate produced in the above (2) is charged into a plunger portion of a spiral flow mold having a plunger diameter of 100 mm and a cross-sectional shape of 50 mm (in width) × 2 mm (in depth), and subjected to press molding using the spiral flow mold whose temperature is controlled to 140 ± 3°C. The molding conditions are set to a molding pressure of 72 Ton, a plunger pressing pressure of 10 MPa, a plunger pressing time of 115 seconds, and a cure time of 130 seconds.
(4) After molding, a composite (molded article) is removed from the mold and the spiral flow length (mm) is measured at 23°C.

### <Evaluation of moldability>

The SMC obtained in the above production of SMC is charged into a molding mold at a charge rate (ratio of the area of SMC with respect to the mold area) of 65%, and subjected to heat and pressure curing for 2 minutes under conditions of a mold temperature of 140°C and a pressure of 8 MPa to obtain a molded article of carbon fiber reinforced plastic (CFRP) having a 300 mm square flat plate shape with a thickness of 2 mm (hereinafter sometimes referred to as a "molded plate"). With regard to molding, the following criteria were used for evaluation. The results are shown in Table 1.
a: The molded plate was produced without any problems.
b: A part of the molded plate was absent.
c: A part of the molded plate was deformed and a blister occurred.

### <Mechanical properties of molded plate (flexural strength, flexural modulus)>

Among the obtained molded plates, flexural test pieces having a length of 60 mm and a width of 25 mm were cut out from those which could be molded without any problems. Using a 5 kN Instron universal testing machine, a three-point flexural strength / flexural modulus test was conducted at a crosshead speed of 1.4 mm/min with L/D = 16 to measure the flexural strength and the flexural modulus. The number of test pieces measured was n = 6, and the average values were taken as the flexural strength and flexural modulus of the molded plate, respectively. The higher the flexural strength and the flexural modulus, the better the mechanical strength. The flexural strength is preferably 300 MPa or more, when the content rate of carbon fiber (carbon fiber content) is 50% by mass. The flexural modulus is preferably 24 GPa or more.

### <Evaluation of curing characteristics>

The curing characteristics of the obtained SMC were measured by the following method to determine a gel time (GT), cure time (CT), and maximum exothermic temperature (Tmax). The results are shown in Table 1.
(1) The SMC is further stored at 25 ± 5°C for 168 hours or more from immediately after production (after allowing the SMC precursor to stand at room temperature for 168 hours), and the SMC after storage is cut into 24 plies having a size of 60 mm × 60 mm (4 SMC plies = 1 test piece).
(2) The upper and lower heating plates of a curing characteristic measuring device (air-type hot press machine manufactured by Misuzu Erie Co., Ltd.) are maintained at 140 ± 2°C.
(3) A SUS plate for measurement (U-shape with an outer diameter of 100 mm × 100 mm) having a thickness of 4 mm is placed on the lower heating plate of the above-mentioned curing characteristic measuring device.
(4) A sheathed thermocouple (K type) is covered with a heat resistant tape and sandwiched between 2 SMC plies and 2 SMC plies cut in the above (1), and the thermocouple is set so that it is at the center position of the cut SMC to prepare a test piece.
(5) The test piece sandwiching the thermocouple produced in the above (4) is placed at the center of the SUS plate for measurement having a thickness of 4 mm on the lower heating plate of the curing characteristic measuring device.
(6) After placing the test piece in the above (5), the upper heating plate of the curing characteristic measuring device is immediately lowered, and the test piece is heated and pressurized at an air pressure of 0.3 MPa, and the temperature of the test piece is measured and plotted with a temperature data logger.
(7) The measurement is stopped when the plot (temperature curve) of the temperature data logger reaches the exothermic peak and the temperature starts to drop, the upper heating plate is raised, the cured test piece is taken out, and the thermocouple is pulled out from the cured test piece.
(8) The gel time (GT), cure time (CT) and maximum exothermic temperature (Tmax) are analyzed from the obtained measurement data.

### (Examples 2 to 8, Comparative Examples 1 to 2)

A resin paste was obtained in the same manner as in the example except that the composition of the resin paste (matrix resin) was changed as shown in Table 1, to produce an SMC. Further, the impregnation properties, spiral flow length, moldability, mechanical properties of the molded plate, and curing characteristics were evaluated in the same manner as in Example 1. The results are shown in Table 1.

### (Example 9, Comparative Example 3)

SMCs of Example 9 and Comparative Example 3 were produced in the same manner as in Example 1 and Comparative Example 1 except that the time for allowing the SMC precursor to stand in the production of SMC was changed from 168 hours to 1,176 hours (49 days). Further, the impregnation properties, spiral flow length, moldability, mechanical properties of the molded plate, and curing characteristics were evaluated in the same manner as in Example 1. The results are shown in Table 1.

**[Table 1]**

| | | Type | Unit | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Ex. 9 | Conv Ex. 3 |
|---|---|---|---|---|---|---|---|---|---|---|---|---|---|---|---|
| Matrix resin | Component (A) | A1 | Parts by mass | 100 | 100 | 100 | 100 | 100 | 100 | 100 | 100 | 100 | 100 | 100 | 100 |
| | Component (B) | B1 | Parts by mass | 22.0 | 22.0 | 22.0 | 22.0 | 22.0 | 22.0 | 22.0 | 22.0 | 22.0 | 22.0 | 22.0 | 22.0 |
| | Component (C), comparison products | C1 | Parts by mass | 0.02 | 0.04 | 0.06 | 0 | 0 | 0.03 | 0.08 | 0.10 | 0 | 0 | 0.02 | 0 |
| | | C2 | Parts by mass | 0 | 0 | 0 | 0 | 0 | 0 | 0 | 0 | 0.02 | 0.06 | 0 | 0.02 |
| | | C3 | Parts by mass | 0 | 0 | 0 | 0.02 | 0 | 0 | 0 | 0 | 0 | 0 | 0 | 0 |
| | | C4 | Parts by mass | 0 | 0 | 0 | 0 | 0.02 | 0 | 0 | 0 | 0 | 0 | 0 | 0 |
| | Component (D) | D1 | Parts by mass | 0.50 | 0.50 | 0.50 | 0.50 | 0.50 | 0.50 | 0.50 | 0.50 | 0.50 | 0.50 | 0.50 | 0.50 |
| | | D2 | Parts by mass | 0.50 | 0.50 | 0.50 | 0.50 | 0.50 | 0.50 | 0.50 | 0.50 | 0.50 | 0.50 | 0.50 | 0.50 |
| | Other components | E1 | Parts by mass | 0.35 | 0.35 | 0.35 | 0.35 | 0.35 | 0.35 | 0.35 | 0.35 | 0.35 | 0.35 | 0.35 | 0.35 |
| Carbon fiber bundle | | I | Carbon fiber content (% by mass) | 50 | 50 | 50 | 50 | 50 | 50 | 50 | 50 | 50 | 50 | 50 | 50 |
| Number of days SMC precursor is allowed to stand at 23°C | | | | 7 | 7 | 7 | 7 | 7 | 7 | 7 | 7 | 7 | 7 | 49 | 49 |
| Viscosity after initial thickening | | | Pa·s | 22 | 20 | 21 | 22 | 21 | 21 | 20 | 19 | 20 | 18 | 24 | 22 |
| Content rate of component (C) in matrix resin | | | ppm | 35 | 47 | 81 | 30 | 31 | 40 | 111 | 148 | 4 | 21 | 35 | 4 |
| Evaluation | Spiral flow length | | mm | 560 | 590 | 605 | 500 | 505 | 570 | 605 | 610 | 510 | 590 | 470 | 350 |
| | Impregnation properties | | | A | A | A | A | A | A | A | A | A | A | A | A |
| | Moldability | | | a | a | a | a | a | a | a | a | b | C | a | b |
| | Gel time | | seconds | 51.5 | 62.5 | 67.0 | 50.0 | 50.0 | 58.0 | 75.0 | 84.0 | 46.5 | 58.0 | 50.0 | 43.5 |
| | Cure time | | seconds | 57.5 | 68.5 | 73.0 | 55.0 | 54.5 | 63.5 | 81.0 | 89.5 | 52.5 | 64.0 | 55.0 | 49.5 |
| | Maximum exothermic temperature | | °C | 196.7 | 197.1 | 192.4 | 195.1 | 199.4 | 197.8 | 198.5 | 199.4 | 195.6 | 201.2 | 191.0 | 192.1 |
| | Flexural strength | | MPa | 363 | 355 | 334 | 342 | 339 | 360 | 311 | 300 | Could not be performed | Could not be performed | 351 | Could not be performed |
| | Flexural modulus | | GPa | 25.7 | 25.1 | 24.6 | 25.0 | 24.9 | 25.5 | 23.0 | 21.2 | Could not be performed | Could not be performed | 25.6 | Could not be performed |

As shown in the above results, the SMCs of Examples 1 to 9 were excellent in the impregnating properties of the resin paste (matrix resin) into the carbon fiber bundle at the time of production of SMCs. Moreover, the moldability at the time of heat and pressure molding of SMC was excellent, and the GT was 50 seconds or more and the CT was 55 seconds or more. From these results, it was confirmed that these SMCs were excellent in flowability at the time of heat and pressure molding. In addition, the molded articles obtained by curing the SMCs of Examples 1 to 9 were also sufficiently excellent in mechanical strength.

On the other hand, with all of the SMCs of Comparative Examples 1 and 2 in which hydroquinone (radical polymerization inhibitor having a hydroxyl group) was used instead of the component (C) as a radical polymerization inhibitor, a defect or deformation occurred in the molded plate after molding.

Moreover, from the comparison of Example 1, Comparative Example 1, Example 9 and Comparative Example 3, it can be seen that changes in the GT and CT are different between the SMCs using a radical polymerization inhibitor having no hydroxyl group (Example 1, Example 9) and the SMCs using a radical polymerization inhibitor having a hydroxyl group (Comparative Example 1 and Comparative Example 3). More specifically, the SMCs using a radical polymerization inhibitor having no hydroxyl group showed less changes in the GT and CT during long term storage. In addition, also in terms of moldability, the SMCs using a radical polymerization inhibitor having no hydroxyl group showed better flowability.

### [Industrial Applicability]

According to the present invention, favorable impregnation properties of the matrix resin into the reinforcing fiber at the time of production of fiber-reinforced molding materials such as SMCs are achieved. In addition, it is possible to obtain a fiber-reinforced molding material having excellent moldability, which has favorable flowability at the time of molding either immediately after production or after storage.

## Claims

1. A fiber-reinforced molding material comprising a matrix resin and a reinforcing fiber, wherein
said matrix resin comprises a reactant of the following component (A) and the following component (B), and the following component (C), and
a spiral flow length measured in accordance with ElMS T901 is 300 mm or longer,
component (A): a component having one or more ethylenically unsaturated groups in one molecule and including at least one selected from the group consisting of the following component (A-1) and the following component (A-2);
component (A-1): an unsaturated polyester resin having one or more ethylenically unsaturated groups and one or more hydroxyl groups in one molecule;
component (A-2): an epoxy (meth)acrylate resin having one or more ethylenically unsaturated groups and one or more hydroxyl groups in one molecule;
component (B): an isocyanate compound;
component (C): a radical polymerization inhibitor having no hydroxyl group in a molecule.

2. The fiber-reinforced molding material according to Claim 1, wherein said spiral flow length after 168 hours of production is 500 mm or longer.

3. The fiber-reinforced molding material according to Claim 1 or 2, wherein a total content of said component (A-1) and said component (A-2) is 90% by mass or more with respect to a total mass of said component (A).

4. The fiber-reinforced molding material according to any one of Claims 1 to 3, wherein a content of said component (B) is from 5 to 25% by mass with respect to a total mass of said matrix resin.

5. The fiber-reinforced molding material according to any one of Claims 1 to 4, wherein a content of said component (C) is 50 ppm by mass or more with respect to a total mass of said matrix resin.

6. The fiber-reinforced molding material according to any one of Claims 1 to 5, wherein a content of said component (C) is from 0.025 to 0.1 parts by mass with respect to 100 parts by mass of said component (A).

7. The fiber-reinforced molding material according to any one of Claims 1 to 6, wherein said component (C) is a compound which exhibits a polymerization inhibiting function at a temperature of 100°C or more.

8. The fiber-reinforced molding material according to any one of Claims 1 to 7, wherein said reinforcing fiber is a carbon fiber.

9. The fiber-reinforced molding material according to any one of Claims 1 to 8, which has a gel time (exothermic method, 140°C) of 50 seconds or more and a cure time (exothermic method, 140°C) of 55 seconds or more.

10. The fiber-reinforced molding material according to any one of Claims 1 to 9, wherein said fiber-reinforced molding material is a sheet molding compound containing a reinforcing fiber bundle of short fibers as said reinforcing fiber.

11. A molded article comprising a cured product of the fiber-reinforced molding material according to any one of Claims 1 to 10.
